# EUROPEAN PATENT APPLICATION

(11) **EP 1 837 580 A1**
(43) Date of publication of application: **26.09.2007**
(21) Application number: 07251217.1
(22) Date of filing: 22.03.2007
(51) Int. Cl.: F16L 33/24

(54) **Air, water and fluid transfer couplings**

(30) Priority: 24.03.2006 AU 2006901532
(71) Applicant: Tony Powell Hose and Fittings Pty. Ltd, Geebung, QLD 4034 (AU)
(72) Inventor: Powell, Tony c/o Tony Powell Hose and Fittings Pty. Ltd, Geebung 4034, Queensland (AU)
(74) Representative: Tomkinson, Alexandra

(57) **Abstract**

A fluid transfer hose coupling has a metal body with a tubular tail 4 which has an exterior buttress thread 14. The shell 18 of the coupling has an axial bore 20 for screwing on to the tail and a threaded counterbore 22 with an interior buttress thread 24 of opposite hand. When the hose 16 is inserted in the shell and the tail is screwed into the shell, the hose 16 is squeezed and urged into the shell.

## Description

### FIELD OF THE INVENTION

This invention concerns hose couplings especially couplings for fire hoses but includes couplings for compressed air, water and fluid handling hoses

### BACKGROUND OF THE INVENTION

In the size range ⅛ - 6 inch diameter it is known to construct metal couplings with a tail having a circumferential barb toward the end of the tail. In use the hose is lubricated and pushed over the barb to lie overlapping the tail. A hose clamp is then applied to the overlapped part of the hose and tightened onto the tail. The clamp is either a worm drive clip or a split band closed by a pair of nuts and bolts.

In our Innovation Patent No. 2004100162, we describe a hose coupling, the body of the coupling having a tail and being capable of receiving a clamping shell, wherein the shell has an interiorly threaded portion and an adjacent portion capable of receiving the prepared end of a hose, and the coupling has a tail with an exteriorly threaded portion for engaging the shell and an adjacent tapered portion for entering the hose. The portion of the shell which received the end of the hose has an annular shoulder which acts as a hose stop. The same portion has an interior wall which is cylindrical. The exterior wall of the shell has two flats to assist gripping in a vice, wrench or the like.

A typical application for this invention is fire appliances which carry booster hoses for bush fires. These are fabric hoses but extensive reinforcing allows them to withstand pump pressures of 600psi and hoses having a working pressure of 800psi. The hoses are sometimes subject to short pressure spikes causing water hammer which can increase the line pressure up to 5 times. These peaks impose disconnecting forces on the coupling and the hose and coupling can separate violently. The tail of the coupling has a thread of rounded profile giving a sinusoidal appearance in section. The shell which screws onto the tail has internal ridges. Such couplings are common in USA, Australia and Europe. The couplings are commonly made of brass or aluminum. It is the threaded surface of the tail and the smooth cylindrical surface of the shell which grip the end of the hose.

The attachment of the couplings to fire hoses including booster hoses presents certain difficulties. The hoses are made with inner tube reinforced fabric and cover. As wear and tear downgrades the hoses they are replaced and reconnected to the couplings at the ends of the hose. Fitting is commonly by the staff who operate the equipment and it is they who must use the couplings to produce reliable coupling connections.

Manufacture and design of the couplings must therefore simplify the operation of adding a coupling. It is important to reduce the risk of weakening the inserted end of the hose which could hasten a leak or a burst without spoiling the grip between hose and coupling which give a poor pressure rating.

The soundness of the coupling/hose connection is measured by an End Pull Test. Couplings made in USA attached to USA originating hose pulled out at 11.8 tons.

### SUMMARY OF THE INVENTION

The apparatus aspect of the invention provides a hose coupling comprising
(a) a body having a tubular tail extending from the body with an exterior thread extending over at least part of the tail,
(b) a shell being a socket capable of receiving the end of a hose, having a threaded bore for screwing on to the exterior thread of the tail and a threaded counterbore against which the hose is compressed when the tail is screwed into the shell and into the mouth of the hose.

The bore and counterbore may be separated by a shoulder which acts as a stop for the hose.

The thread on the bore of the shell and the thread of the tubular tail will be matching threads to allow the parts to screw together.

A variety of buttress thread sections give a satisfactory improvement in sealing. Square section threads and trapezoidal section threads are useful. Barbs cut as a series of rings on the counterbore are considered to be a mechanical equivalent. Barbs cut as a spiral on the counterbore would be a mechanical equivalent to a buttress thread. A sound connection depends partly upon the wall thickness of the hose.

The thread on the tail may be a buttress thread. The thread on the counterbore may also be a buttress thread. The threads may be of opposite hand.

The buttress threads may be of trapezoidal section. When fitted, this mechanism helps pull the hose on to the coupling allowing a more secure bond.

### BRIEF DESCRIPTION OF THE DRAWINGS

One embodiment of the invention is now described with reference to the accompanying drawings, in which:

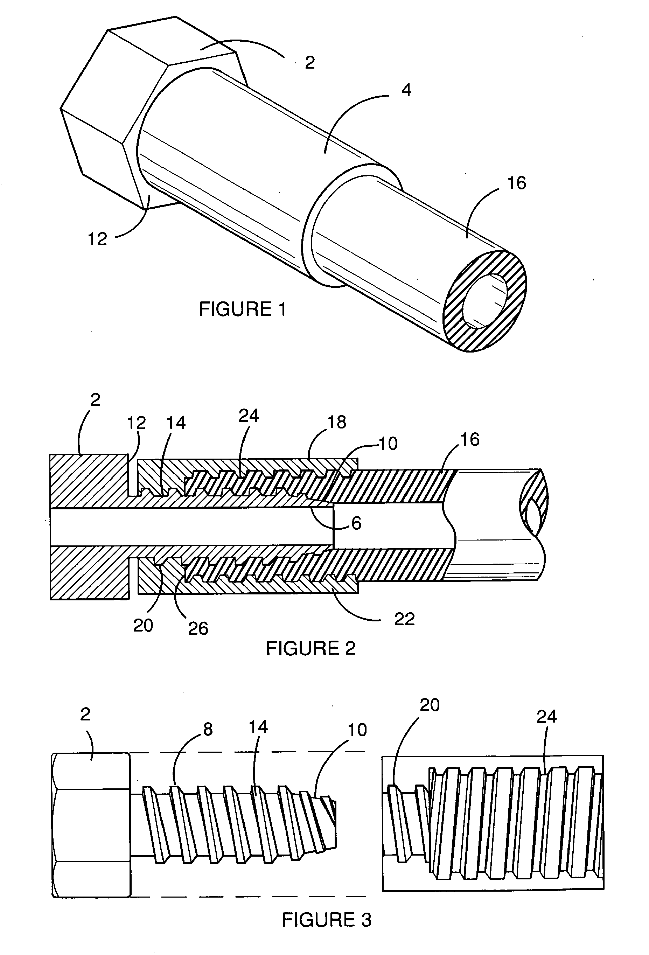

Figure 1 is a perspective of a booster hose coupling attached to a hose.
Figure 2 is a section of the coupling of Figure 1.
Figure 3 is an exploded side view of the coupling of Figure 2.

### DETAILED DESCRIPTION WITH RESPECT TO THE DRAWINGS

Referring now to the drawings, the male part of the coupling has a hexagonal brass body 2. Tail 4 extends from body 2. The internal surface 6 of the tail is cylindrical. The exterior surface 8 has a taper 10 which occupies about a quarter of the length of the tail. Body face 12 acts as a stop for the female part of the coupling. The part of the tail between the taper and the body face 12 has a RH buttress thread 14. The thread continues into the taper 10 but reduces in depth as it meets the taper. The taper is a push fit in the mouth of hose 16.

The female part 18 is a brass socket with a threaded bore 20. The 3.775mm pitch thread matches tail thread 14. Cylindrical wall 22 has a LH buttress thread 24. The thread extends to the shoulder 26. The diametrical separation between the threads is 3.5mm, whereas the hose wall thickness is 6.5mm. The pitch of thread 24 is 7mm.

In use the hose is cut cleanly at 90° to the hose axis and the braiding is smoothed. The cut end is a push fit into the socket where it stops at the shoulder 26. The socket is transferred to a vice and the taper 10 of the tail is inserted into the hose mouth until the tail thread 14 engages the bore thread 20 and enters the hose end compressing the hose wall between threads 14 and 24.
As the tail winds into the hose, the hose tends to rotate. Any tendency of the hose to be displaced from the shell is countered by the opposite hand of the entering tail. The tail wind forces the hose to wind into the socket thereby seating the end more firmly against the shoulder 26.

The most used sizes are ½, ¾ and 1 inch diameter. The drawings show the most popular size fitting, namely 1 inch, albeit the dimensions are expressed metrically. The angle of the buttress thread 24 is 45°.

We have found the advantages of the above embodiment to be:
1. The coupling is applicable to air, water, gas and fluid handling hoses.
2. The End Pull Test on a coupling of the same size as the US coupling and hose referred to above gave a pull of 16 tons.

## Claims

1. An air or water hose coupling comprising a body (2) having a tubular tail (4) extending from the body and a shell (18) being a socket capable of receiving an end of a hydraulic hose (16) **characterised in that** the tail has an exterior thread (14) extending over at least part of the tail and the socket has an axial threaded bore (20) for screwing on to the exterior thread of the tail and a threaded counterbore (22) against which the hose is compressed when the tail is screwed into the mouth of the hose.

2. A hose coupling as claimed in Claim 1, **characterised in that** the bore (20) and counterbore (22) are separated by a shoulder (26) which acts as a stop for the hose.

3. A hose coupling as claimed in Claim 1, **characterised in that** the exterior thread (14) extending over at least part of the tail (4) and the thread (24) of the counterbore are of opposite hands.

4. A hose coupling as claimed in Claim 3, **characterised in that** the threads (14, 24) are matching buttress threads.

5. A hose coupling as claimed in Claim 4, **characterised in that** the threads (14, 24) are of trapezoidal section.

6. A hose coupling as claimed in any one of Claims 1-5, **characterised in that** the tail has a leading end and a trailing end and the leading end has a taper (10).

7. A hose coupling as claimed in Claim 6, **characterised in that** the taper (10) extends over about 25% of the tail length.

8. A hose coupling as claimed in Claim 6 or 7, **characterised in that** the exterior thread (14) on the tail continues into the taper but reduces in depth as the thread meets the taper (10).

9. A hose coupling as claimed in any one of the preceding claims, **characterised in that** the diametrical separation between the tail and socket is 3-25mm.
